# EUROPEAN PATENT APPLICATION

(11) **EP 4 589 735 A1**
(43) Date of publication of application: **23.07.2025**
(21) Application number: 24217076.9
(22) Date of filing: 03.12.2024
(51) Int. Cl.: H01M 10/613, H01M 10/653, H01M 10/6554, H01M 10/658, H01M 50/213, H01M 50/249, H01M 50/289, H01M 50/291, H01M 50/30, H01M 50/35, H01M 50/507, H01M 50/293, H01M 10/625, H01M 10/6556

(54) **BATTERY MODULE AND BATTERY PACK**

(30) Priority: 17.01.2024 CN 202420126065 U
(71) Applicant: AESC Japan Ltd., Kanagawa, 2520012 (JP)
(72) Inventor: SHI, Bowen, Pudong New Area Shanghai 201315 (CN); HE, Yafei, Pudong New Area Shanghai 201315 (CN)
(74) Representative: Becker, Eberhard

(57) **Abstract**

A battery module and a battery pack are provided. The battery module includes a casing including a bottom plate, side plates, end plates , and a top plate fixedly connected to the side plates and the end plates to enclose and form an accommodating cavity; a fixed bracket located in the accommodation cavity, mounted on the bottom plate, and provided with a plurality of rows of positioning slots; a cell stack including cylindrical cells arranged in a plurality of rows, where a top portion of each of the cylindrical cells is provided with an electrode terminal; a cell contact system (CCS) component mounted on one side of the cell stack close to the top plate and electrically connected to the electrode terminals of the cylindrical cells; and a cooling plate arranged on one side of the CCS component away from the cell stack.

## Description

### BACKGROUND

### Technical Field

The disclosure relates to the technical field of cells and specifically relates to a battery module and a battery pack.

### Description of Related Art

Power batteries are the power source of electric vehicles, and the cell to pack (CTP) structure is a relatively common power battery structure for power batteries. In power battery CTP technology, modules are omitted and a large number of cylindrical cells are directly connected in series and parallel. In terms of the CTP structure using cylindrical cells, the assembly process of the CTP structure includes first arranging multiple cylindrical cells in groups to form a cell group and then filling the cell group with glue in the box of the battery pack. However, due to the large number of single cylindrical cells in the CTP structure, there are problems such as complex grouping process and difficulty in filling the entire pack with glue. Moreover, at present, the structural form of cylindrical cell CTP generally faces the problem of difficulty in repair. For instance, if a single cylindrical cell has quality problems, the entire battery pack may need to be disassembled.

### SUMMARY

In view of the abovementioned shortcomings of the related art, the disclosure aims to provide a battery module and a battery pack to address the problems of complex process of grouping and difficulty in filling the entire pack with glue found in the structural form of the currently-available cylindrical cell CTP as well as the problem of difficulty in repair.

To achieve the above and other related purposes, the disclosure provides a battery module including a casing, a fixed bracket, a cell stack, a cell contact system (CCS) component, and a cooling plate.

The casing includes a bottom plate, side plates, a top plate, and end plates. The side plates are arranged on opposite two sides of the bottom plate, the end plates are arranged on the other two sides of the bottom plate, and the top plate is fixedly connected to the side plates and the end plates to enclose and form an accommodating cavity.

The fixed bracket located in the accommodation cavity, mounted on the bottom plate, and provided with a plurality of rows of positioning slots.

The cell stack includes cylindrical cells arranged in a plurality of rows. A top portion of each of the cylindrical cells is provided with an electrode terminal, a bottom portion of each of the cylindrical cells is provided with an venting valve, and the bottom portions of the cylindrical cells are mounted in the positioning slots.

The CCS component is mounted on one side of the cell stack close to the top plate and electrically connected to the electrode terminals of the cylindrical cells.

The cooling plate is arranged on one side of the CCS component away from the cell stack.

In an embodiment of the disclosure, a thermally-conductive structural glue is further included, and the thermally-conductive structural glue is filled at least in a space between the top portions of the cylindrical cells and the cooling plate.

In an embodiment of the disclosure, a height of the thermally-conductive structural glue accounts for between one-fifth and one-fourth of a height of each of the cylindrical cells.

In an embodiment of the disclosure, the thermally-conductive structural glue covers the CCS component and the electrode terminals of the cylindrical cells.

In an embodiment of the disclosure, a potting glue is further included, and the potting glue is filled in a space around the cell stack that is not filled by the thermally-conductive structural glue.

In an embodiment of the disclosure, the side plates and the bottom plate form an integrated U-shaped frame structure.

In an embodiment of the disclosure, the cooling plate is arranged between the CCS component and the top plate, or the cooling plate and the top plate are integrated into an integrated structure.

In an embodiment of the disclosure, an outer side of the top plate is covered with thermal insulation foam.

In an embodiment of the disclosure, exhaust channels are formed between the fixed bracket and the bottom plate, at least one of the two end plates is provided with an exhaust groove, and the exhaust groove communicates with the exhaust channels.

In an embodiment of the disclosure, a plurality of protruding structures are provided on one surface of the fixed bracket close to the bottom plate, the exhaust channels are formed between adjacent two of the protruding structures and the bottom plate, and the positioning slots are located between adjacent two of the protruding structures.

In an embodiment of the disclosure, one of the two end plates on opposite sides of the casing is provided with a low-voltage signal acquisition terminal and the other one is provided with a high-voltage output terminal. The low-voltage signal acquisition terminal and the high-voltage output terminal are electrically connected to the CCS component, and the exhaust groove is arranged on a bottom portion of the end plate where the low-voltage signal acquisition terminal is mounted.

In an embodiment of the disclosure, each of the positioning slots includes a through hole and a recess, and the recess is located on one surface of the fixed bracket away from the bottom plate and surrounds the through hole. The bottom portions of the cylindrical cells are mounted in the recesses, the venting valves correspond to the through holes, and the through holes communicate with the exhaust channels.

The disclosure further provides a battery pack including the battery module according to any one of the abovementioned embodiments.

The disclosure provides a battery module and a battery pack. Compared to the conventional CTP structure, the battery module and the battery pack composed of the module require only a simple process, so large-scale production can be easily achieved. Further, the size of the battery module can be designed according to needs, making the battery module applicable to a wide range. Moreover, by stacking a small number of single cylindrical cells to form the cell stack and mounting the cell stack in the accommodating cavity formed by the casing and the end plates, the number of single cylindrical cells is lowered, and small module glue filling is achieved. In this way, the problem of difficulty in filling the entire pack with glue in the CTP structure is solved, and the process difficulty is lowered.

The disclosure provides a battery module and a battery pack. By providing the fixed bracket in the module to position the cylindrical cells, the problem of difficult positioning of the cylindrical cells in the CTP structure is solved and the process difficulty is thereby lowered. Further, the exhaust channels are formed between the fixed bracket and the bottom plate. In this way, since exhaust channels are provided when thermal runaway occurs in the cells of the module, safety is improved, and cells in other modules are also prevented from being affected. Further, in the battery pack formed by the battery module, when the cells in the battery module have quality problems or thermal runaway, only the battery module with the problems is required to be repaired or replaced, and the convenience of overall maintenance is thus improved.

The disclosure provides a battery module and a battery pack. The cooling plate is arranged between the CCS component and the top plate, or the cooling plate and the top plate are integrated into an integrated structure, so heat generated by the cylindrical cells is dissipated. Further, at least the space between the top portions of the cylindrical cells and the cooling plate is filled with the thermally-conductive structural glue to improve the heat dissipation effect of the cooling plate on the cylindrical cells, and safety is thereby improved. Further, the potting glue is filled in the space around the cell stack that is not filled by the thermally-conductive structural glue, and overall structural strength and stability is ensured in this way.

### BRIEF DESCRIPTION OF THE DRAWINGS

To make the technical solutions provided in the embodiments of the disclosure more clearly illustrated, several accompanying drawings required by the embodiments for description are briefly introduced as follows. Obviously, the drawings in the following description are merely several embodiments of the disclosure, and for a person having ordinary skill in the art, other drawings can be obtained based on these drawings without inventive effort.
FIG. 1 is a schematic view of a structure of a battery module according to an embodiment of the disclosure.
FIG. 2 is a schematic exploded view of the structure of the battery module according to an embodiment of the disclosure.
FIG. 3 is a schematic exploded view of part of the structure of the battery module according to an embodiment of the disclosure.
FIG. 4 is a schematic view of structures of a cell stack and a fixed bracket in the battery module according to an embodiment of the disclosure.
FIG. 5 is a schematic cross-sectional view of the structure of the battery module according to an embodiment of the disclosure.
FIG. 6 is a schematic view of a structure of a bottom surface of the fixed bracket in the battery module according to an embodiment of the disclosure.
FIG. 7 is a schematic view of a structure of a front surface of the fixed bracket in the battery module according to an embodiment of the disclosure.
FIG. 8 is a schematic view of mounting of an output terminal in the battery module according to an embodiment of the disclosure.
FIG. 9 is a schematic view of a structure of a first end plate in the battery module according to an embodiment of the disclosure.
FIG. 10 is a schematic cross-sectional view of the structure of the first end plate in the battery module according to an embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

It should be noted that the drawings provided in the embodiments are merely schematically illustrating the basic idea of the disclosure. Therefore, the drawings only show components related to the disclosure rather than drawings which are depicted according to the numbers, shapes, and sizes of the components in actual implementation. In actual implementation, the types, numbers, and proportions of the components can be changed arbitrarily, and the component layout type may also be more complex.

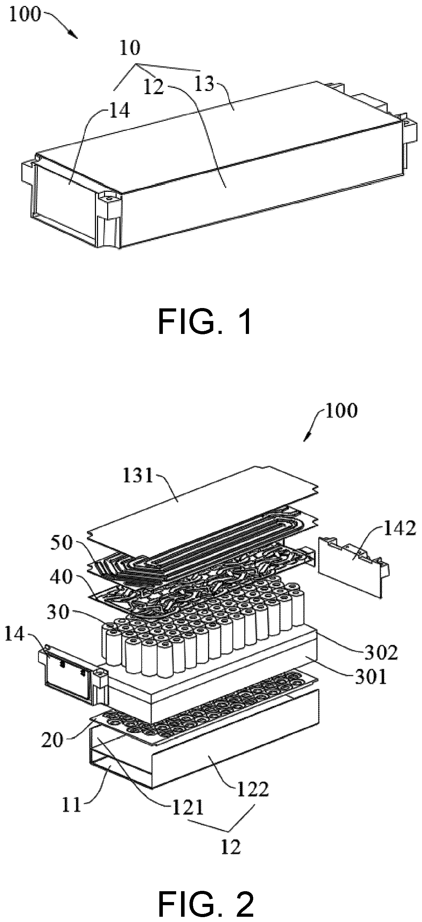

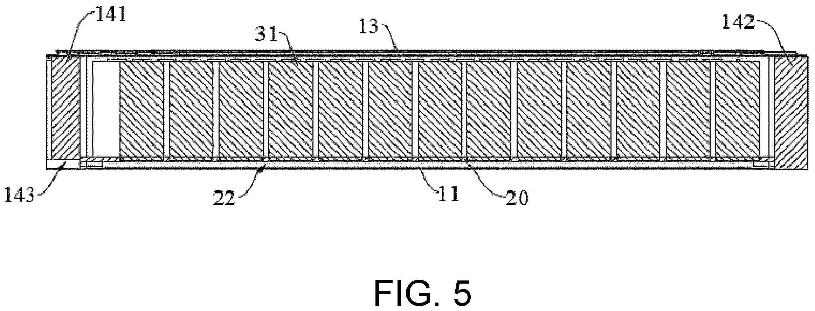

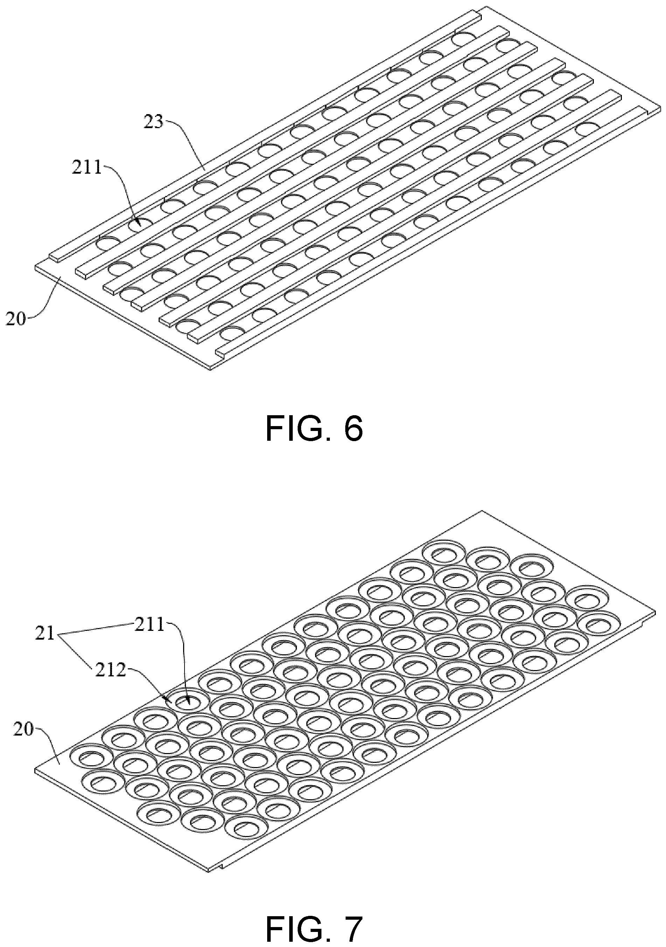

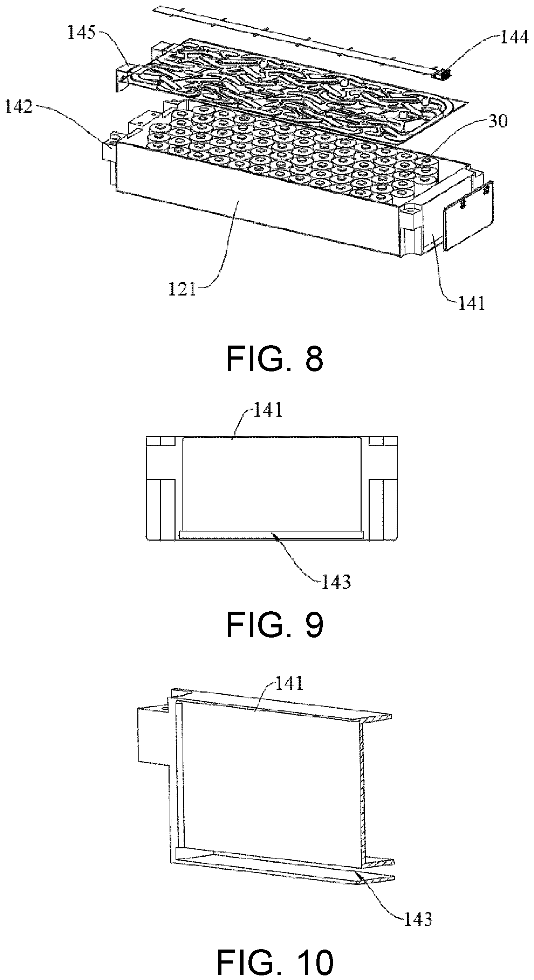

With reference to FIG. 1 to FIG. 10, the disclosure provides a battery module and a battery pack to address the problems of complex process of grouping and difficulty in filling the entire pack with glue found in the structural form of the currently-available cylindrical cell CTP and the problem of difficulty in repair. For instance, if a single cylindrical cell has quality problems, the safety of the entire battery pack may be affected or the entire battery pack may further be scrapped. To be specific, as shown in the drawings, a battery module 100 includes a casing 10, a fixed bracket 20, a cell stack 30, a cell contact system (CCS, integrated busbar system) component 40, and a cooling plate 50. An accommodating cavity is formed in the casing 10, and the fixed bracket 20 is mounted in the accommodating cavity and located on a bottom portion of the accommodating cavity. The cell stack 30 includes cylindrical cells 31 arranged in a plurality of rows. The cell stack 30 is mounted on the fixed bracket 20, and the fixed bracket 20 is configured to position and fix each of the cylindrical cells 31. The CCS component 40 is mounted on one surface of the cell stack 30 away from the fixed bracket 20 and is electrically connected to the cylindrical cells 31. The cooling plate 50 is arranged on top portions of the cylindrical cells 31 to dissipate heat from the cylindrical cells 31. That is, the battery module 100 has structures such as the cooling plate 50 and the fixed bracket 20, making the battery module 100 more integrated.

With reference to FIG. 1 to FIG. 3, in this embodiment, the top portion of each of the cylindrical cells 31 is provided with an electrode terminal 311, and a bottom portion of each of the cylindrical cells 31 is provided with an venting valve. For instance, each of the cylindrical cells 31 includes the electrode terminal 311, the venting valve, and an outer casing 312. The electrode terminal 311 is arranged on a top portion of the outer casing 312, and the venting valve is arranged on a bottom portion of the outer casing 312 to achieve thermoelectric separation. In this embodiment, the cell stack 30 includes a plurality of rows of cylindrical cells 31 stacked together, and each row of cylindrical cells 31 includes a plurality of single cylindrical cells 31. A potting glue 301 is potted and filled on an outer side of each of the cylindrical cells 31 to fix multiple individual cylindrical cells 31 together to form the cell stack 30. The potting glue 301 can ensure its overall structural strength and stability. Further, in the disclosure, due to the small number of single cylindrical cells, small module glue filling may be achieved, so that the problem of difficulty in filling the entire pack with glue in the CTP structure is solved, and the process difficulty is lowered. It can be understood that a shape of the potting glue 301 shown in the figure is only a schematic shape and is not a real shape. In this embodiment, the CCS component 40 is mounted on one side of the cell stack 30 close to a top plate 13 and electrically connected to the electrode terminals 311 of the cylindrical cells 31.

With reference to FIG. 1 to FIG. 3, in this embodiment, the casing 10 includes a bottom plate 11, side plates 12, the top plate 13, and end plates 14. The side plates 12 are arranged on opposite two sides of the bottom plate 11, the end plates 14 are arranged on the other two sides of the bottom plate 11, and the top plate 13 is fixedly connected to the side plates 12, and the end plates 14 to enclose and form an accommodating cavity. For instance, the bottom plate 11, the side plates 12, the top plate 13, and the end plates 14 may be fixedly connected by welding or buckling. To be specific, the side plates 12 include a first side plate 121 and a second side plate 122, and the end plates 14 include a first end plate 141 and a second end plate 142. The first side plate 121 and the second side plate 122 are fixedly connected to the two opposite sides of the bottom plate 11, and the first end plate 141 and the second end plate 142 are arranged on the other two sides of the bottom plate 11. The top plate 13 connects the first side plate 121, the second side plate 122, the first end plate 141, and the second end plate 142 in sequence to enclose and form the accommodating cavity. In this embodiment, the first side plate 121, the second side plate 122, and the bottom plate 11 are integrally-formed. That is, the first side plate 121, the second side plate 122, and the bottom plate 11 may be integrated into an integrated U-shaped frame structure.

With reference to FIG. 2 to FIG. 4, in this embodiment, the fixed bracket 20 is provided with multiple rows of positioning slots 21, and each positioning slot 21 in each row is arranged to correspond to one cylindrical cell 31. When the cell stack 30 is mounted on the fixed bracket 20, the bottom portions of the cylindrical cells 31 provided with the venting valves are mounted in the corresponding positioning slots 21, so that the cylindrical cells 31 are positioned and mounted. By providing the fixed bracket 20 in the module to position the cylindrical cells 31, the problem of difficult positioning of the cylindrical cells in the CTP structure is solved and the process difficulty is thereby lowered.

With reference to FIG. 2 to FIG. 6, in this embodiment, the fixed bracket 20 is mounted on the bottom plate 11, exhaust channels 22 are formed between the fixed bracket 20 and the bottom plate 11, and the exhaust channels 22 communicate with the positioning slots 21. To be specific, a plurality of protruding structures 23 are provided on one surface of the fixed bracket 20 close to the bottom plate 11. The exhaust channels 22 are formed between adjacent two of the protruding structures 23 and the bottom plate 11, and the positioning slots are located between adjacent two of the protruding structures 23. In this way, the blocking of the positioning slots 21 that may affect the opening and exhaust of the venting valves during thermal runaway is avoided. When one cylindrical cell 31 undergoes thermal runaway, the gas exhausted from the cylindrical cell 31 enters the exhaust channel 22 and is discharged to the outside through the exhaust channel 22. Therefore, the chain reaction of thermal runaway is prevented from occurring, and the safety of the battery module 100 is thereby improved.

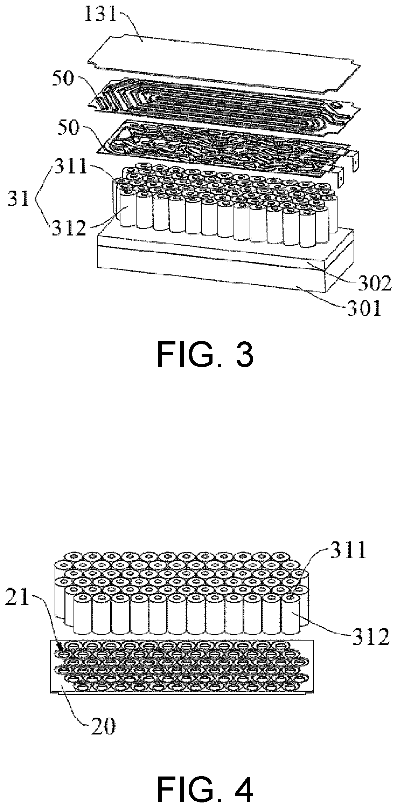

With reference to FIG. 4 to FIG. 7, in this embodiment, each of the positioning slots 21 includes a through hole 211 and a recess 212. The through hole 211 is connected to the exhaust channel 22, the recess 212 is arranged on one surface of the fixed bracket 20 away from the bottom plate 11, and the recess 212 surrounds the through hole 211. When the cylindrical cells 31 are mounted in the positioning slots 21, the bottom portions of the cylindrical cells 31 provided with the venting valves are located in the recesses 212, and the venting valves correspond to the through holes 211. When one cylindrical cell 31 undergoes thermal runaway, the gas exhausted from the cylindrical cell 31 enters the exhaust channel 22 through the through hole 211 and is discharged to the outside through the exhaust channel 22. Therefore, the chain reaction of thermal runaway is prevented from occurring, and the safety of the battery module 100 is thereby improved.

With reference to FIG. 2, FIG. 5, and FIG. 8 to FIG. 10, in this embodiment, one of the two end plates 14 on opposite sides of the casing 10 is provided with a low-voltage signal acquisition terminal 144 and the other one is provided with a high-voltage output terminal 145. The low-voltage signal acquisition terminal 144 and the high-voltage output terminal 145 are electrically connected to the CCS component 40. For instance, the low-voltage signal acquisition terminal 144 may be arranged on the first end plate 141 and the high-voltage output terminal 145 may be arranged on the second end plate 142 to separate high-voltage output and low-voltage signal acquisition, so that the safety of battery output is improved. In this embodiment, a bottom portion of at least one of the two end plates 14 is provided with an exhaust groove 143, that is, at least one of the first end plate 141 and the second end plate 142 is provided with the exhaust groove 143. The exhaust groove 143 communicates with the exhaust channels 22 to exhaust gas generated by thermal runaway to the outside of the battery module 100. Preferably, the exhaust groove 143 is arranged on the end plate 14 provided with the low-voltage signal acquisition terminal 144. For instance, the exhaust groove 143 is arranged on the bottom portion of the first end plate 141 and communicates with the exhaust channels 22, so that the high-voltage connection and the thermal runaway exhaust are separated, and the safety of the battery module 100 is thereby improved.

With reference to FIG. 2 and FIG. 3, in this embodiment, since positive and negative output terminals of each of the cylindrical cells 31 are located on the top portion of the cylindrical cell 31, the heat generated by the cylindrical cell 31 is mainly concentrated at the top. Further, the CCS component 40 may also generate more heat. Therefore, in this embodiment, unlike the conventional snake plate cooling method, the cooling plate 50 is arranged on a top portion of the cell stack 30. To be specific, the cooling plate 50 is arranged on one side of the CCS component 40 away from the cell stack 30 to achieve heat dissipation of the cylindrical cells 31 and the CCS component 40. In some other embodiments, the cooling plate 50 and the top plate 13 may be integrated into an integrated structure, that is, a cooling flow channel is arranged in the top plate 13, so that the top plate 13 functions as a cooling plate to dissipate heat from the cylindrical cells 31.

With reference to FIG. 2 and FIG. 3, in this embodiment, the exterior of the cell stack 30 is glued and fixed in a layered manner. For instance, a potting glue 301 and a thermally-conductive structural glue 302 are separately provided in a direction from the bottom portions to the top portions of the cylindrical cells 31. The potting glue 301 can provide strong mechanical strength, while the thermally conductive-structural glue 302 can provide strong heat transfer performance and certain mechanical strength. In this way, the battery module 100 exhibits improved rigidity, its heat dissipation capability can be ensured, and the weight of the module may be lowered to a certain extent.

With reference to FIG. 2 and FIG. 3, in this embodiment, the thermally-conductive structural glue 302 is filled at least in a space between the top portions of the cylindrical cells 31 and the cooling plate 50. Further, a height of the thermally-conductive structural glue 302 accounts for between one-fifth and one-fourth of a height of each of the cylindrical cells 31. In this embodiment, the thermally-conductive structural glue 302 also covers the CCS component 40 and the electrode terminals 311 of the cylindrical cells 31 to further improve the heat dissipation effect. In some other embodiments, the thermally-conductive structural glue 302 also wraps a first region of the outer casing 312, and the first region 312 is a partial region of the outer casing 312 extending downward from the electrode terminal 311. That is, the thermally-conductive structural glue 302 wraps a partial region of the outer casing 312 close to the electrode terminal 311 to further improve the heat dissipation effect of the cooling plate. Further, the potting glue 301 is filled in a space around the cell stack 30 that is not filled by the thermally-conductive structural glue 302. For instance, the potting glue 301 wraps a second region of the outer casing 312 that is not wrapped by the thermally-conductive structural glue 302. The potting glue 301 may ensure the rigidity of the battery module 100 and improve its structural stability. In this embodiment, an outer side of the top plate 13 is also covered with thermal insulation foam 131 to further improve the heat dissipation capacity of the battery module 100.

With reference to FIG. 1 to FIG. 10, the disclosure further provides a battery pack, and the battery pack includes at least one battery module 100. A structure of the at least one battery module 100 is identical or similar to that of the battery module 100 described in the abovementioned embodiments, so description thereof is thus not provided herein to avoid repetition. In the battery pack formed by the at least one battery module 100, when the cells in one battery module 100 have quality problems or thermal runaway, only the battery module 100 with the problems is required to be repaired or replaced, and the convenience of overall maintenance is thus improved.

The disclosure provides a battery module and a battery pack. Compared to the conventional CTP structure, the battery module and the battery pack composed of the module require only a simple process, so large-scale production can be easily achieved. Further, the size of the battery module may be designed according to needs, making the battery module applicable to a wide range. Moreover, by stacking a small number of single cylindrical cells to form the cell stack and mounting the cell stack in the accommodating cavity formed by the casing and the end plates, the number of single cylindrical cells is lowered, and small module glue filling is achieved. In this way, the problem of difficulty in filling the entire pack with glue in the CTP structure is solved, and the process difficulty is lowered.

The disclosure provides a battery module and a battery pack. By providing the fixed bracket in the module to position the cylindrical cells, the problem of difficult positioning of the cylindrical cells in the CTP structure is solved and the process difficulty is thereby lowered. Further, the exhaust channels are formed between the fixed bracket and the bottom plate. In this way, since exhaust channels are provided when thermal runaway occurs in the cells of the module, safety is improved, and cells in other modules are also prevented from being affected. Further, in the battery pack formed by the battery module, when the cells in the battery module have quality problems or thermal runaway, only the battery module with the problems is required to be repaired or replaced, and the convenience of overall maintenance is thus improved.

The disclosure provides a battery module and a battery pack. The cooling plate is arranged between the CCS component and the top plate, or the cooling plate and the top plate are integrated into an integrated structure, so heat generated by the cylindrical cells is dissipated. Further, at least the space between the top portions of the cylindrical cells and the cooling plate is filled with the thermally-conductive structural glue to improve the heat dissipation effect of the cooling plate on the cylindrical cells, and safety is thereby improved. Further, the potting glue is filled in the space around the cell stack that is not filled by the thermally-conductive structural glue, and overall structural strength and stability is ensured in this way.

## Claims

1. A battery module (100), comprising:
a casing (10) comprising a bottom plate (11), side plates (12), a top plate (13), and end plates (14), wherein the side plates (12) are arranged on opposite two sides of the bottom plate (11), the end plates (14) are arranged on other two sides of the bottom plate (11), and the top plate (13) is fixedly connected to the side plates (12), and the end plates (14) to enclose and form an accommodating cavity;
a fixed bracket (20) located in the accommodation cavity, mounted on the bottom plate (11), and provided with a plurality of rows of positioning slots (21);
a cell stack (30) comprising cylindrical cells (31) arranged in a plurality of rows, wherein a top portion of each of the cylindrical cells (31) is provided with an electrode terminal (311), a bottom portion of each of the cylindrical cells (31) is provided with an venting valve, and the bottom portions of the cylindrical cells (31) are mounted in the positioning slots (21);
a cell contact system (CCS) (40) component mounted on one side of the cell stack (30) close to the top plate (13) and electrically connected to the electrode terminals (311) of the cylindrical cells (31); and
a cooling plate (50) arranged on one side of the CCS component (40) away from the cell stack (30).

2. The battery module (100) according to claim 1, further comprising a thermally-conductive structural glue (302) filled at least in a space between the top portions of the cylindrical cells (31) and the cooling plate(50).

3. The battery module (100) according to claim 2, wherein a height of the thermally-conductive structural glue (302) accounts for between one-fifth and one-fourth of a height of each of the cylindrical cells (31).

4. The battery module (100) according to claim 3, wherein the thermally-conductive structural glue (302) covers the CCS component (40) and the electrode terminals (311) of the cylindrical cells (31).

5. The battery module (100) according to claim 2, further comprising a potting glue (301) filled in a space around the cell stack (30) that is not filled by the thermally-conductive structural glue (302).

6. The battery module (100) according to claim 1, wherein the side plates (12) and the bottom plate (11) form an integrated U-shaped frame structure.

7. The battery module (100) according to claim 1, wherein the cooling plate (50) is arranged between the CCS component (40) and the top plate (13), or the cooling plate (50) and the top plate (13) are integrated into an integrated structure.

8. The battery module (100) according to claim 5, wherein an outer side of the top plate (13) is covered with thermal insulation foam.

9. The battery module (100) according to claim 1, wherein exhaust channels (22) are formed between the fixed bracket (20) and the bottom plate (11), at least one of the two end plates (14) is provided with an exhaust groove (143), and the exhaust groove (143) communicates with the exhaust channels (22).

10. The battery module (100) according to claim 9, wherein a plurality of protruding structures (23) are provided on one surface of the fixed bracket (20) close to the bottom plate (11), the exhaust channels (22) are formed between adjacent two of the protruding structures (23) and the bottom plate (11), and the positioning slots (21) are located between the adjacent two of the protruding structures (23).

11. The battery module (100) according to claim 9, wherein one of the two end plates (14) on opposite sides of the casing (10) is provided with a low-voltage signal acquisition terminal (144) and the other one of the two end plates (14) on opposite sides of the casing (10) is provided with a high-voltage output terminal (145), the low-voltage signal acquisition terminal (144) and the high-voltage output terminal (145) are electrically connected to the CCS component (40), and the exhaust groove (143) is arranged on a bottom portion of the end plate where the low-voltage signal acquisition terminal (144) is mounted.

12. The battery module (100) according to claim 9, wherein each of the positioning slots (21) comprises a through hole (211) and a recess (212), the recess (212) is located on one surface of the fixed bracket (20) away from the bottom plate (11) and surrounds the through hole (211), the bottom portions of the cylindrical cells (31) are mounted in the recesses (212), the venting valves correspond to the through holes (211), and the through holes (211) communicate with the exhaust channels (22).

13. A battery pack comprising the battery module (100) according to any one of claims 1 to 12.
